# EUROPÄISCHE PATENTANMELDUNG

(11) **EP 4 303 839 A1**
(43) Veröffentlichungstag der Anmeldung: **10.01.2024**
(21) Anmeldenummer: 22183040.9
(22) Anmeldetag: 05.07.2022
(51) Int. Cl.: G07C 9/00

(54) **ELEKTRONISCHE SCHLIESSZUSTANDSÜBERWACHUNG EINES UTILITY-SCHLIESSSYSTEMS**

(71) Anmelder: dormakaba Schweiz AG, 8623 Wetzikon (CH)
(72) Erfinder: Meier, Tom, 8623 Kempten (CH); Hanselmann, Stephan, 8623 Kempten (CH); Schwendeler, Stefan, 8623 Kempten (CH); Buholzer, Martin, 8623 Kempten (CH)
(74) Vertreter: Balder IP Law, S.L.

(57) **Zusammenfassung**

Die Erfindung betrifft ein Verfahren zur Ausgabe einer Benachrichtigung über das Vorliegen eines zu vermeidenden Zustands eines Schließsystems (1), wobei das Schließsystem (1) einen elektronischen Knauf (2) und eine mit dem elektronischen Knauf (2) betätigbare Schließeinrichtung (3) umfasst, wobei zum Überführen des Schließsystems (1) von einem verriegelten in einen entriegelten Zustand und/oder von einem entriegelten Zustand in einen verriegelten Zustand eine Kraft vom elektronischen Knauf (2) auf die Schließeinrichtung (3) übertragen wird, mit den Schritten:
- Detektieren eines Ist-Zustands des Schließsystems (1),
- Bestimmen eines Soll-Zustands des Schließsystems (1) in Abhängigkeit von vordefinierten Kriterien,
- Vergleichen des Ist-Zustands mit dem Soll-Zustand des Schließsystems (1) und Bestimmung, ob eine Abweichung zwischen dem Ist-Zustand und dem Soll-Zustand des Schließsystems (1) vorliegt,
- Ausgeben mindestens einer Benachrichtigung, wenn eine Abweichung zwischen dem Ist-Zustand und dem Soll-Zustand des Schließsystems (1) vorliegt.

## Beschreibung

Die Erfindung betrifft ein Verfahren zur Ausgabe einer Benachrichtigung über das Vorliegen eines zu vermeidenden Zustands eines Utility-Schließsystems, einen elektronischen Knauf als Bestandteil eines Utility-Schließsystems, eine Utility-Schließumgebung und ein Computerprogramm zur Ausführung des Verfahrens.

Aus dem Stand der Technik sind zahlreiche verschiedene Schließsysteme bekannt, die mechanisch oder elektronisch betätigbar sind. Ein Beispiel für ein elektronisches Schloss ist das so genannte Smart Lock. Es lässt sich durch eine Interaktion mit einem autorisierten Gerät verriegeln und entriegeln lässt. Bei einer solchen Interaktion können beispielsweise verschlüsselte Daten, die eine Identifizierung des autorisierten Geräts ermöglichen, über ein drahtloses Übertragungsprotokoll von dem autorisierten Gerät an das elektromechanische Schloss übermittelt werden. Smart Locks werden insbesondere im Bereich der Zutrittssteuerung für Gebäude und Räume (z. B. für Handwerker, Haushaltshilfen, Mieter von Ferienwohnungen) verwendet. Wesentliche Merkmale derartiger Smart Locks sind, dass diese selbstständig das Schloss betätigen, ohne dass ein Benutzer manuell einen Schlüssel in das Schloss stecken oder dieses manuell betätigen muss, und dass der Schließzustand überwacht werden kann.

Im Bereich der Utility-Dienstleistungen, d. h. bei Versorgungsbetrieben, die Wartung und Bedienung von Infrastrukturobjekten durchführen (z. B. Stromkästen, Wasserversorgungspunkte, Gasdruckregelanlagen, Stellwerke an Bahngleisen), ist eine hohe Zuverlässigkeit und Sicherheit der Schließsysteme - nachfolgend Utility-Schließsysteme genannt - wichtig, wobei zugleich der Energiebedarf geringgehalten werden muss. Daher werden in diesem Bereich noch traditionell rein mechanische Schlüssel und Schließeinrichtungen verwendet. Insbesondere bei Utility-Schließsystemen kommt es daher häufig zu Problemen. Beispielsweise kann es vorkommen, dass das Servicepersonal, das eine Wartung an einem Infrastrukturobjekt durchführt, vergisst das Utility-Schließsystem wieder zu verriegeln.

Der Erfindung liegt die Aufgabe zugrunde, ein verbessertes Verfahren zum Betreiben eines Utility-Schließsystems bereitzustellen, insbesondere eines elektromechanischen Utility-Schließsystems, welches aus sicherheitstechnischen Aspekten verbessert ist.

Die Aufgabe wird durch die Gegenstände der unabhängigen Ansprüche gelöst. Vorteilhafte Weiterbildungen der Erfindung sind in den abhängigen Ansprüchen, der Beschreibung und in den Figuren angegeben. Merkmale und Details, die in Zusammenhang mit dem erfindungsgemäßen Verfahren beschrieben sind, gelten dabei auch in Zusammenhang mit einer erfindungsgemäßen Vorrichtung und/oder einer erfindungsgemäßen Verwendung und umgekehrt.

Erfindungsgemäß wird ein Verfahren zur Ausgabe einer Benachrichtigung über das Vorliegen eines zu vermeidenden Zustands eines Utility-Schließsystems bereitgestellt, wobei das Utility-Schließsystem einen elektronischen Knauf und eine mit dem elektronischen Knauf betätigbare Schließeinrichtung umfasst, wobei zum Überführen des Utility-Schließsystems von einem verriegelten in einen entriegelten Zustand und/oder von einem entriegelten Zustand in einen verriegelten Zustand manuell eine Kraft vom elektronischen Knauf auf die Schließeinrichtung übertragbar ist bzw. übertragen wird, mit den Schritten:
- Detektieren eines Ist-Zustands des Utility-Schließsystems,
- Bestimmen eines Soll-Zustands des Utility-Schließsystems in Abhängigkeit von vordefinierten Kriterien,
- Vergleichen des Ist-Zustands mit dem Soll-Zustand des Utility-Schließsystems und Bestimmung, ob eine Abweichung zwischen dem Ist-Zustand und dem Soll-Zustand des Utility-Schließsystems vorliegt,
- Ausgeben mindestens einer Benachrichtigung, wenn eine Abweichung zwischen dem Ist-Zustand und dem Soll-Zustand des Utility-Schließsystems vorliegt.

Vorzugsweise ist vorgesehen, dass der elektronische Knauf elektrisch und/oder mechanisch mit der Schließeinrichtung gekoppelt, insbesondere verbunden, ist. Ferner kann der elektronische Knauf von der Schließeinrichtung elektrisch und/oder mechanisch zerstörungsfrei lösbar ausgebildet sein.

Es kann ferner vorgesehen sein, dass der elektronische Knauf und ein mobiles Endgerät dazu eingerichtet sind, miteinander drahtlos zu kommunizieren und zumindest Zutrittsberechtigungen und/oder Öffnungsbefehle und/oder Positionsdaten zu übertragen.

Insbesondere eignet sich das Verfahren zur Verwendung an einem Gebäude und/oder an einer Zugangslösung für einen Raum, in welchem zu wartende oder zu überprüfende Gerätschaften und/oder Vorrichtungen installiert sind, die auch unter Einhaltung bestimmter Zeitspannen, die gegebenenfalls normiert vorgegeben sind, zu überprüfen bzw. zu sichten sind. Der Begriff Utility-Schließsystem ist insofern zu verstehen, dass es sich um ein Schließsystem handelt, welches den Zutritt bzw. Zugriff auf ein Utility-Infrastrukturobjekt ermöglichst. Die Erfindung ist somit für den Bereich der Utility-Dienstleistungen konzipiert, d. h. bei Versorgungsbetrieben, die die Wartung und Bedienung von Infrastrukturobjekten durchführen (z. B. Stromkästen, Wasserversorgungspunkte, Gasdruckregelanlagen, Stellwerke an Bahngleisen). Mit der Erfindung wird insbesondere im Bereich der Utility-Dienstleistungen eine hohe Zuverlässigkeit und Sicherheit der Schließsysteme gewährleistet.

Insbesondere kann die Schließeinrichtung als ein Schließzylinder für eine Tür, insbesondere eine Gebäudetür, eine Raumtür und/oder für eine Möbeltür, ausgeführt sein, ohne dass die beispielhafte Nennung solcher Schließzylinder beschränkend sein soll.

Es ist insbesondere denkbar, dass der zu "vermeidende Zustand" vorliegt, wenn eine Abweichung zwischen dem Ist-Zustand und dem Soll-Zustand des Schließsystems vorliegt. Der zu vermeidende Zustand ist somit insbesondere als unerwünschter Zustand zu verstehen, der beispielweise versehentlich hervorgerufen wird und einer Aktion bedarf.

Zum Detektieren eines Ist-Zustands des Utility-Schließsystems kann eine Sensoreinrichtung im Utility-Schließsystem, insbesondere im elektronischen Knauf, angeordnet sein. Die vordefinierten Kriterien für die Bestimmung eines Soll-Zustands können insbesondere in einem nichtflüchtigen Speicher des elektronischen Knaufs bereitgestellt werden. Die Bestimmung eines Soll-Zustands kann insbesondere mittels einer Recheneinheit des Utility-Schließsystems bzw. des elektronischen Knaufs erfolgen.

Alternativ oder zusätzlich können die vordefinierten Kriterien in einem mobilen Endgerät, das zur Kommunikation mit dem Utility-Schließsystem bzw. dem elektronischen Knauf eingerichtet ist, bereitgestellt werden, wobei der Ist-Zustand vom Utility-Schließsystem bzw. vom elektronischen Knauf an das mobile Endgerät gesendet wird. Die Bestimmung eines Soll-Zustands kann dabei auf dem mobilen Endgerät erfolgen.

Es ist denkbar, dass mithilfe des mobilen Endgeräts eine Konfiguration des elektronischen Knaufs, insbesondere über die drahtlose Verbindung, durchgeführt wird. Es ist beispielsweise denkbar, dass die drahtlose Kommunikationsverbindung zwischen dem mobilen Endgerät und dem elektronischen Knauf mithilfe von Bluetooth ausgebildet wird, wobei insbesondere ein Bluetooth-Pairing durchgeführt wird. Es kommen alternativ jedoch auch andere drahtlose Kommunikationsverbindungen, wie beispielsweise Ultra-Wideband (UWB), zwischen dem mobilen Endgerät und dem elektronischen Knauf infrage. Die drahtlose Kommunikationsverbindung kann insbesondere als eine Nahbereichskommunikationsverbindung ausgebildet sein.

Es ist gemäß einer Ausführungsform der vorliegenden Erfindung denkbar, dass eine Schließsysteminformation, insbesondere betreffend das Utility-Schließsystem, von dem elektronischen Knauf bereitgestellt werden kann und insbesondere vom mobilen Endgerät empfangen werden kann. Die Schließsysteminformation kann insbesondere ein unique identifier (UID) sein, die das Schließsystem eindeutig identifizierbar macht. Die Schließsysteminformation kann insbesondere vom mobilen Endgerät an ein Serversystem weitergeleitet werden, um einen Abgleich mit einer digitalen Repräsentation des Utility-Schließsystems im Serversystem durchzuführen. Basierend darauf kann durch das Serversystem ein Konfigurationsdatenpaket bereitgestellt werden und an das mobile Endgerät gesendet werden. Das Konfigurationsdatenpaket ist vorzugsweise Teil der digitalen Repräsentation. Mit anderen Worten, kann die UID des Utility-Schließsystems verwendet werden, um eine zugehörige vorgesehene Konfiguration des Utility-Schließsystems durchzuführen.

Das mobile Endgerät kann eingerichtet sein, um das Konfigurationsdatenpaket für das jeweilige Utility-Schließsystem an den elektronischen Knauf des Utility-Schließsystems weiterzuleiten, um das Utility-Schließsystem so zu konfigurieren, wie insbesondere durch die digitale Repräsentation vorgegeben. Für die Kommunikation zwischen dem mobilen Endgerät und dem elektronischen Knauf kann insbesondere jede geeignete drahtlose Kommunikationstechnologie verwendet werden, beispielsweise Bluetooth, Zigbee, UWB.

Das Konfigurationsdatenpaket kann insbesondere Tageszeiten und/oder Uhrzeiten umfassen, zu denen ein Zutritt ermöglicht werden kann. Alternativ oder zusätzlich kann das Konfigurationsdatenpaket eine Blacklist oder ein Blacklist-Update umfassen, welche das Utility-Schließsystem so konfiguriert, dass bestimmten mobilen Endgeräten der Zutritt verwehrt wird.

Ferner kann vorgesehen sein, dass das mobile Endgerät durch eine Kommunikation mit dem Server die Berechtigung zum entriegeln des Utility-Schließsystems erhält. Es ist denkbar, das mobile Endgerät mit Schlüsselinformationen zum Entriegeln einer Gruppe von Utility-Schließsystemen zu konfigurieren. Die Gruppe von Utility-Schließsystemen kann beispielsweise alle Schließeinrichtungen von Gebäuden, Räumen und/oder zu kontrollierenden Vorrichtungen, die ein Techniker in einem Zeitintervall, beispielswiese an einem Tag, abfährt und/oder prüft, umfassen. Die Berechtigung kann insbesondere zeitlich begrenzt vergeben werden.

Vorzugsweise ist vorgesehen, dass die Kraft, die zum Überführen des Utility-Schließsystems von einem verriegelten in einen entriegelten Zustand und/oder von einem entriegelten Zustand in einen verriegelten Zustand vom elektronischen Knauf auf die Schließeinrichtung übertragen wird, einhergeht mit einer manuell durch einen Benutzer geführten translatorischen und/oder rotatorischen Bewegung des elektronischen Knaufs relativ zur Schließeinrichtung, wobei die Kraft insbesondere ein Drehmoment ist.

Durch die manuell mechanisch betätigbare Ausführung des Utility-Schließsystems ist es möglich, Energie, die bei einer elektromechanischen Öffnung erforderlich wäre, einzusparen. Ein etwaiger Energiespeicher des Utility-Schließsystems benötigt lediglich Energie zur Kommunikation mit dem mobilen Endgerät und je nach Implementierung kann eine besonders stromsparende Kommunikationstechnik verwendet werden. Optional kann vorgesehen sein, dass der Knauf zunächst berührt oder leicht betätigt werden muss, um die Kommunikationsschnittstelle für eine Kommunikation mit dem mobilen Endgerät zu aktivieren. Anschließend kann die eigentliche Betätigung zum Entriegeln erfolgen. So kann der Energiebedarf des Utility-Schließsystems weiter verringert werden.

Die manuelle mechanische Betätigung kann beispielsweise ein Reindrücken des elektronischen Knaufs oder ein Drehen des elektronischen Knaufs sein. Auch eine Kombination aus Drücken und Drehen bzw. Drehen und Drücken ist denkbar.

Es ist somit bevorzugt, dass das Entriegeln des Utility-Schließsystems sowohl eine mechanische Betätigung des elektronischen Knaufs, insbesondere ein Ausüben oder Übertragen eines Drehmoments, als auch eine informationstechnische Kommunikation zwischen dem Utility-Schließsystem bzw. dem elektronischen Knauf und dem mobilen Endgerät, das insbesondere zum Entriegeln der Schließeinrichtung konfiguriert sein kann.

Es ist bevorzugt denkbar, dass ein elektrischer Energiespeicher des mobilen Endgeräts die Versorgung des Utility-Schließsystems mit Energie übernimmt. Dazu kann beispielsweise eine drahtlose Ladetechnologie verwendet werden. Drahtlose Ladetechnologien sind aus dem Stand der Technik bekannt und basieren insbesondere auf Induktion Eine drahtlose Bereitstellung elektrischer Energie des kann somit insbesondere über eine induktive Energieübertragung erfolgen. Es ist somit denkbar, dass das Utility-Schließsystem Schließeinrichtung keine eigene elektrische Energieversorgung aufweist.

Besonders bevorzugt kann sein, wenn beim Ausgeben der mindestens einen Benachrichtigung, eine, insbesondere erste, Benachrichtigung auf dem elektronischen Knauf ausgegeben wird, wobei die, insbesondere erste, Benachrichtigung insbesondere eine akustische und/oder haptische und/oder visuelle Benachrichtigung sein kann. Diese Maßnahme ist besonders vorteilhaft hinsichtlich der einfachen Handhabbarkeit des Systems, insbesondere im Hinblick auf die Überprüfbarkeit des Zustands der betreffenden Schließeinrichtung.

Insbesondere können visuelle Anzeigeelemente am elektronischen Knauf angeordnet sein. Diese können beispielsweise als LED-Lämpchen am elektronischen Knauf ausgebildet sein, wobei das Visualisieren der, insbesondere ersten, Benachrichtigung besonders einfach und sicher bewirkt werden kann. Natürlich kann die, insbesondere erste, Benachrichtigung auch durch einen Text, ein Bild, einen Ton (oder mehrere Töne, auch eine Melodie) und/oder durch Vibration am elektronischen Knauf generiert werden. Dazu sind leidlich die dazu notwendigen Vorrichtungen zu implementieren. Diese Maßnahmen unterstützen die oben genannten Vorteile erheblich.

Besonders bevorzugt kann sein, wenn beim Ausgeben der mindestens einen Benachrichtigung, eine, insbesondere zweite, Benachrichtigung auf einem mobilen Endgerät ausgegeben wird, wobei das mobile Endgerät ausgebildet und eingerichtet ist, um mit dem Utility-Schließsystem bzw. dem elektronischen Knauf zu kommunizieren, wobei die, insbesondere zweite, Benachrichtigung, die auf dem mobilen Endgerät ausgegeben wird, insbesondere eine akustische und/oder haptische und/oder visuelle Benachrichtigung ist.

Die Ausgabe einer Benachrichtigung auf dem mobilen Endgerät ist besonders vorteilhaft, da notwendige Vorrichtungen für eine Benachrichtigung bei mobilen Endgeräten i. d. R. bereits vorhanden sind, beispielsweise ein Vibrationsmotor. Ferner ist Ausgabe der, insbesondere zweiten, Benachrichtigung auf dem mobilen Endgerät aufgrund der vielfältigen Darstellungsmöglichkeiten benutzerfreundlich gestaltbar und kann an die Vorlieben eines Benutzers angepasst werden. So kann beispielsweise der Benutzer die Art der Benachrichtigung entsprechend seinen Präferenzen festlegen.

Wird eine Benachrichtigung jeweils auf dem elektronischen Knauf und dem mobilen Endgerät vorgesehen, d. h. eine erste und eine zweite Benachrichtigung vorgesehen, ist zudem die Wahrscheinlichkeit erhöht, dass ein Benutzer die Benachrichtigung bemerkt. Der Benutzer erhält ferner die Möglichkeit, die Benachrichtigungen auf Konsistenz zu überprüfen. Selbstverständlich liegt es ebenfalls im Sinne der Erfindung, dass lediglich die insbesondere erste oder die insbesondere zweite Benachrichtigung von dem Benutzer beachtet wird.

Die insbesondere zweite Benachrichtigung kann beispielsweise eine akustische Benachrichtigung mit gleichzeitiger Erzeugung eines Textes sein. So ist ein weiterer Sicherheitsaspekt erfüllt, da die, insbesondere zweite, Benachrichtigung besonders einfach und sicher bemerkbar generiert werden kann. Durch die Nutzung von Text kann ferner die Benachrichtigung mit zusätzlichen Informationen angereichert sein, so dass der Benutzer unmittelbar erkennen kann, welcher unerwünschte Zustand vorliegt.

Besonders bevorzugt kann sein, dass der Ist-Zustand des Utility-Schließsystems einen Schließzustand der Schließeinrichtung umfasst, wobei der Schließzustand ein entriegelter oder ein verriegelter Schließzustand ist.

Insbesondere kann sein, dass der Soll-Zustand des Utility-Schließsystems einen Schließzustand der Schließeinrichtung umfasst, wobei der Schließzustand ein entriegelter oder ein verriegelter Schließzustand ist. Der entriegelte Schließzustand liegt beispielsweise vor, wenn eine entsprechende Tür entriegelt ist. Der verriegelte Schließzustand liegt beispielsweise vor, wenn die entsprechende Tür verriegelt ist.

Es ist somit gemäß einer Ausführungsform der vorliegenden Erfindung denkbar, dass das Bestimmen eines Soll-Zustands des Utility-Schließsystems in Abhängigkeit von vordefinierten Kriterien ein Ermitteln und/oder Festlegen eines vorgesehenen Schließzustandes der Schließeinrichtung umfasst, insbesondere derart, dass ermittelt und/oder festgelegt wird, ob sich die Schließeinrichtung in einem entriegelten oder einem verriegelten Schließzustand befinden soll.

Beispielsweise kann der Soll-Zustand dem verriegelten Schließzustand entsprechen und der Ist-Zustand den entriegelten Schließzustand entsprechen.

Es kann auf einfacher Weise festgelegt werden, welcher Soll-Zustand welche Bedingungen umfassen soll. Denkbar ist beispielsweise eine Regel, die als Soll-Zustand einen bestimmten Schließzustand der Schließeinrichtung zu einer bestimmten Uhrzeit vorsieht. Zusätzlich oder alternativ ist eine Regel denkbar, bei dem der Soll-Zustand einen Abstand des mobilen Endgeräts zum Utility-Schließsystem umfasst. Zusätzlich oder alternativ ist eine Regel möglich, bei der der Soll-Zustand einen Benutzerzustand, z. B. eine Bewegungsart eines Benutzers, umfasst. Beispielsweise wird eine Nachricht ausgegeben, wenn abends um 10 Uhr der entriegelte Schließzustand vorliegt und das mobile Endgerät mindestens 1 km vom Utility-Schließsystem entfernt ist und/oder der Benutzer gerade Auto fährt.

Es ist denkbar, dass das Ermitteln und/oder Festlegen des vorgesehenen Schließzustandes in Abhängigkeit eines oder mehrerer der folgenden vordefinierten Kriterien erfolgt:
- Festlegen durch einen Nutzer und/oder Betreiber der Schließeinrichtung, ob sich die Schließeinrichtung in einem entriegelten oder verriegelten Zustand befinden soll;
- Festlegen in Abhängigkeit eines Gebäudetyps, an dem sich die Schließeinrichtung befindet, ob sich die Schließeinrichtung in einem entriegelten oder verriegelten Zustand befinden soll;
- Festlegen anhand eines, vorzugsweise wählbaren, Sicherheitskriteriums, ob sich die Schließeinrichtung in einem entriegelten oder verriegelten Zustand befinden soll;
- Festlegen einer maximalen Zeitdauer nach dem Entriegeln der Schließeinrichtung, nach der die Schließeinrichtung wieder in einem verriegelten Zustand sein soll;
- Festlegen eines oder mehrerer Zeiträume, in denen sich die Schließeinrichtung, immer in einem verriegelten oder immer in einem entriegelten Zustand befinden soll.

Es ist beispielsweise denkbar, dass festlegbar ist, dass sich die Schließeinrichtung in einem oder mehreren Zeiträumen immer in einem entriegelten oder immer in einem verriegelten Schließzustand befinden soll. Beispielsweise wäre es denkbar, dass sich die Schließeinrichtung immer nach einer bestimmten Uhrzeit in einem verriegelten Zustand befinden soll. Hierdurch können Sicherheitsanforderungen an die Schließeinrichtung vorteilhaft berücksichtigt werden. Vorzugsweise ist der Soll-Zustand individuell pro Schließeinrichtung bestimmbar, insbesondere ermittelbar und/oder festlegbar.

Besonders bevorzugt kann sein, wenn der Schließzustand der Schließeinrichtung bzw. des Utility-Schließsystems mittels Daten mindestens eines im elektronischen Knauf angeordneten Sensors ermittelt wird, wobei der mindestens eine Sensor insbesondere ausgewählt ist aus den folgenden Sensortypen: Beschleunigungssensor, Gyroskop, Drucksensor.

So kann stets sichergestellt werden, dass der jeweilige Schließzustand zu jeder Zeit in seinem tatsächlichen Zustand generierbar ist. Mit anderen Worten ist eine Überwachung des Schließzustands in Echtzeit möglich. Es ist beispielsweise denkbar, dass mithilfe von Daten des Beschleunigungssensors, Gyroskops und/oder Drucksensors ermittelbar ist:
- ob der elektronische Knauf manuell in eine Stellung überführt wurde, in der der elektronische Knauf die Schließeinrichtung entriegelt, und/oder
- ob der elektronische Knauf die Stellung, in der die Schließeinrichtung entriegelt ist, verlassen hat und/oder
- ob der elektronische Knauf derart betätigt, beispielsweise gedreht, wurde, dass die Drehung eine Änderung des Schließzustands hervorgerufen hat.

Die Verwendung eines Beschleunigungssensors ist hinsichtlich seines besonders geringen Stromverbrauchs aber auch bezüglich der preiswerten Beschaffung vorteilhaft. Die Verwendung eines Gyroskops ist hinsichtlich dessen hoher Genauigkeit vorteilhaft. Die Verwendung von Drucksensoren ist hinsichtlich der besonders einfachen Ableitung des Schließzustands sowie der einfachen konstruktiven Ausgestaltung vorteilhaft.

Es kann vorgesehen sein, dass die Schließeinrichtung zumindest ein Sperrelement umfasst, das in einer Sperrstellung eine Rotation eines Schließkerns gegenüber einem Schließeinrichtungsgehäuse verhindert und in einer Entsperrstellung eine Rotation des Schließkerns in dem Schließeinrichtungsgehäuse ermöglicht.

Besonders bevorzugt kann sein, wenn der Ist-Zustand des Schließsystems einen ermittelten Kennwert umfasst, der aus Signalkennwerten einer drahtlosen Kommunikation zwischen dem elektronischen Knauf und dem mobilen Endgerät abgeleitet ist, wobei das mobile Endgerät ausgebildet und eingerichtet ist, um mit dem elektronischen Knauf drahtlos zu kommunizieren, und wobei der Soll-Zustand einen Schwellenkennwert umfasst.

Für die drahtlose Kommunikation zwischen dem elektronischen Knauf und dem mobilen Endgerät kommen unterschiedliche drahtlose Kommunikationstechnologien infrage. Es ist beispielsweise denkbar, dass die drahtlose Kommunikation zwischen dem elektronischen Knauf und dem mobilen Endgerät mithilfe von Bluetooth, Near Field Communication (NFC), WLAN, insbesondere Wi-Fi direct, ZigBee, Ultra-Wideband (UWB) und/oder Device-to-Device (D2D) Kommunikation erfolgt. Die Signalkennwerte der drahtlosen Kommunikation zwischen dem elektronischen Knauf und dem mobilen Endgerät können bevorzugt Signalstärkekennwerte, besonders bevorzugt RSSI (Received Signal Strength Indicator)-Werte umfassen. Alternativ oder zusätzlich können beispielsweise Signalkennwerte, wie Time-of-Flight und/oder Angle-of-Arrival einbezogen werden, um eine relative Bewegung zwischen dem elektronischen Knauf und dem mobilen Endgerät zu detektieren. Dies ist beispielsweise bei der Verwendung einer Ultra-Wideband Kommunikation zwischen dem elektronischen Knauf und dem mobilen Endgerät möglich.

Insbesondere kann der Schwellenkennwert festgelegt sein durch die Mindestanforderungen an Signalkennwerten der drahtlosen Kommunikation, so dass ein Datenaustausch zwischen dem elektronischen Knauf und dem mobilen Endgerät noch möglich ist, also die drahtlose Kommunikation noch gewährleistet ist. Mit anderen Worten: Eine Kommunikation zwischen dem elektronischen Knauf und dem mobilen Endgerät ist nur möglich, solange eine Verbindung zwischen dem elektronischen Knauf und dem mobilen Endgerät besteht. Beispielsweise ab einer bestimmten Distanz, die durch die verwendete Kommunikationstechnologie festgelegt ist, ist keine Kommunikation mehr zwischen dem elektronischen Knauf und dem mobilen Endgerät möglich. In diesem Fall speichert das mobile Endgerät Informationen aus der letzten Kommunikation, die zwischen dem elektronischen Knauf und dem mobilen Endgerät erfolgt ist, beispielsweise die Ortungsdaten des mobilen Endgeräts.

Ein Unterschreiten des Schwellenkennwerts kann ein unerwünschter Zustand bzw. eine Abweichung des Ist-Zustands von einem Soll-Zustand sein, der bzw. die die Ausgabe der mindestens einen Benachrichtigung auslöst.

Mittels Signalkennwerten, insbesondere mittels Signalstärkekennwerten, insbesondere RSSI-Werten, kann ein möglicher kurz bevorstehender Verbindungsabbruch zwischen dem elektronischen Knauf und dem mobilen Endgerät erkannt werden. Dieser kann beispielsweise aufgrund einer zunehmenden Entfernung zwischen mobilem Endgerät und elektronischen Knauf auftreten, wobei mit zunehmender Entfernung die Signalstärke abnimmt. Auch kann dies durch Widerstände, z. B. abschirmend wirkende Betonwände o. ä. auftreten.

Um insbesondere einem Vergessen des Abschließens des entsprechenden Infrastrukturobjekts vorzubeugen, kann bei Unterschreiten eines Signalstärkeschwellenwertes, eine Benachrichtigung auf dem mobilen Endgerät und/oder dem elektronischen Knauf ausgegeben werden, wenn das Utility-Schließsystem sich noch im entriegelten Zustand befindet.

Die Benachrichtigung erfolgt besonders bevorzugt kurz vor einem möglichen Verbindungsabbruch zwischen dem elektronischen Knauf und dem mobilen Endgerät. Alternativ oder zusätzlich kann die Benachrichtigung auch bei oder nach einem Verbindungsabbruch erfolgen.

Es kann somit insbesondere eine Benachrichtigung ausgelöst werden, wenn mithilfe eines Abgleichs des ermittelten Kennwerts, insbesondere des Signalkennwertes, und des Schwellenkennwerts, insbesondere des Signalstärkeschwellenwertes, festgestellt wird, dass sich das mobile Endgerät von dem elektronischen Knauf entfernt und das Utility-Schließsystem noch nicht verriegelt wurde. Hierdurch wird einem Benutzer erspart, nach einer Zurücklegung weiter Wege, beispielsweise mit dem Auto, zu dem entsprechenden Infrastrukturobjekt zurückzukehren, um das Utility-Schließsystem zu verriegeln. Die Benachrichtigung ist somit als Frühwarnsystem verwendbar.

Besonders bevorzugt kann sein, wenn der ermittelte Signalkennwert ein Signalstärkekennwert ist, und der Schwellenkennwert ein Signalstärkeschwellenwert ist. Verglichen mit einer reinen Distanzmessung ist es durch die Verwendung von Signalkennwerten möglich, ein besonders robustes Benachrichtigungssystem bereitzustellen, da beispielsweise bei dicken Wänden bereits kurze Distanzen problematisch werden können und Verbindungsabbrüche hervorrufen können.

Alternativ oder zusätzlich kann dennoch vorgesehen sein, dass der Ist-Zustand des Utility-Schließsystems eine ermittelte räumliche Distanz zwischen dem elektronischen Knauf und einem mobilen Endgerät umfasst, wobei der Soll-Zustand einen Distanzschwellenwert zwischen dem elektronischen Knauf und dem mobilen Endgerät umfasst. Die Abweichung des Ist-Werts von dem Soll-Wert liegt insbesondere vor, wenn die Distanz den Distanzschwellenwert überschreitet.

Zur Ermittlung der räumlichen Distanz kann auf Ortungsdaten/GPS-Daten zurückgegriffen werden, wobei ein GPS-Modul im mobilen Endgerät und/oder im elektronischen Knauf angeordnet sein kann. Das mobile Endgerät verfügt standardmäßig über ein GPS-Modul, so dass der Abstand zwischen dem elektronischen Knauf und dem mobilen Endgerät auf einfach Weise berechnet werden kann, ohne ein GPS-Modul im elektronischen Knauf zu benötigen. Alternativ zur Nutzung von GPS-Daten, kann eine Kommunikation über Ultra-Wideband (UWB) oder Bluetooth Low Energy (BLE) vorgesehen sein, um die Distanz zwischen dem elektronischen Knauf und dem mobilen Endgerät zu bestimmen, wie oben beschrieben. Jedoch ist in diesem Fall eine Bestimmung der Distanz nur solange möglich, wie eine Verbindung zwischen dem elektronischen Knauf und dem mobilen Endgerät besteht.

Besonders bevorzugt kann sein, dass der Ist-Zustand des Schließsystems einen Benutzerzustand eines Benutzers des mobilen Endgeräts umfasst, wobei eine Detektion des Benutzerzustands anhand von Beschleunigungsdaten und/oder Geschwindigkeitsdaten und/oder Temperaturdaten erfolgt, wobei die Beschleunigungsdaten und/oder Geschwindigkeitsdaten und/oder Temperaturdaten mittels Sensoren des mobilen Endgeräts erfasst werden. Die Sensoren sind insbesondere Beschleunigungssensoren und/oder Geschwindigkeitssensoren und/oder Temperatursensoren.

In zweckmäßiger Ausführung werden vorzugsweise Beschleunigungsdaten und/oder Geschwindigkeitsdaten des mobilen Endgeräts herangezogen. Dieses kann anhand der Bewegungen, die der Benutzer ausführt feststellen, in welchem Benutzerzustand sich der Benutzer befindet, beispielsweise kann der Benutzerzustand Aktivitäten, wie Gehen, Stehen, Sitzen, etc. umfassen.

Es ist denkbar, dass der Ist-Zustand des Schließsystems mithilfe von Beschleunigungsdaten und/oder Geschwindigkeitsdaten und/oder Temperaturdaten von einem oder mehreren Sensoren des mobilen Endgeräts ermittelt wird. Mithilfe von Beschleunigungsdaten und/oder Geschwindigkeitsdaten des mobilen Endgeräts kann beispielsweise ermittelt werden, dass sich das mobile Endgerät in einem Fahrzeug befindet, insbesondere dann, wenn die Beschleunigungsdaten und/oder Geschwindigkeitsdaten charakteristische Merkmale für die Beschleunigungs- und/oder Geschwindigkeitsentwicklung eines Fahrzeugs während einer Fahrt aufweisen.

Ist eine Verbindung zwischen dem mobilen Endgerät und dem elektronischen Knauf abgebrochen oder nur sehr schwach, kann darauf rückgeschlossen werden, dass der Benutzer sich vom Utility-Schließsystem wegbewegt. Wenn sich zugleich die Schließeinrichtung sich im entriegelten Schließzustand befindet, kann eine Benachrichtigung ausgegeben werden. Mithilfe von Temperaturdaten von einem oder mehreren Sensoren des mobilen Endgeräts kann beispielsweise ermittelt werden, ob das mobile Endgerät in einer Tasche eines Kleidungsstücks eines Nutzers oder am Körper eines Nutzers mitgeführt wird oder ob es sich in einem Innenraum eines Gebäudes oder Fahrzeugs befindet. Der Ist-Zustand des Utility-Schließsystems kann somit mithilfe derartiger Temperaturdaten bestimmt werden.

Besonders bevorzugt kann es sein, dass eine Abweichung des Ist-Zustands von dem Soll-Zustand dann vorliegt, wenn
- sich die Schließeinrichtung im entriegelten Zustand befindet, und
- ein mobiles Endgerät, welches zur Entriegelung des Utility-Schließsystems zuvor mit dem elektronischen Knauf kommuniziert hat, sich vom elektronischen Knauf entfernt oder entfernt hat, wobei insbesondere ein Entfernen des mobilen Endgeräts vom elektronischen Knauf durch eine Signalstärke der drahtlosen Verbindung und/oder durch Ortungsdaten und/oder durch Beschleunigungsdaten und/oder Geschwindigkeitsdaten des mobilen Endgeräts festgestellt wird.

Mit diesen Maßnahmen ist es beispielsweise vorteilhaft vermeidbar, dass sich der Benutzer unbeabsichtigt von dem elektronischen Knauf entfernt, was zu Folgeaktionen führen könnte, die kostspielig (z. B. Zeitverschwendung) und auch wenig nachhaltig (z. B. Kraftstoffverbrauch) wären. Die Beschleunigungsdaten und/oder Geschwindigkeitsdaten des mobilen Endgeräts können beispielsweise charakteristisch für ein fahrendes Fahrzeug sein, sodass mithilfe der Beschleunigungsdaten und/oder Geschwindigkeitsdaten des mobilen Endgeräts ermittelbar ist, ob sich das mobile Endgerät in einem Fahrzeug befindet und sich somit vom Utility-Schließsystem entfernt.

Besonders bevorzugt kann sein, dass das Utility-Schließsystem Informationen darüber umfasst, ob sich das mobile Endgerät innerhalb eines vordefinierten räumlichen Bereichs befindet, wobei bei einer Abweichung des Ist-Zustands von dem Soll-Zustand nur dann die Ausgabe einer Benachrichtigung erfolgt, wenn sich das mobile Endgerät außerhalb des vordefinierten räumlichen Bereichs befindet.

Durch das Vorsehen dieser Funktion wird vermieden, dass ein Benutzer während beispielsweise der Durchführung von Wartungsarbeiten an einem vorgesehenen Ort, der durch das Schließsystem gesichert ist, eine Benachrichtigung erhält. Mit anderen Worten: Ein Benutzer, der das mobile Endgerät bei sich trägt und sich in einem vordefinierten räumlichen Bereich bewegt, beispielsweise in einem Raum, in dem Wartungsarbeiten durch den Benutzer zu erledigen sind, erhält während er sich in dem vordefinierten räumlichen Bereich befindet, keine Benachrichtigung. Dadurch wird vermieden, dass der Benutzer durch nicht notwendige Benachrichtigungen während der Durchführung von beispielsweise Wartungsarbeiten gestört wird.

Es ist beispielsweise denkbar, dass das Detektieren des Ist-Zustands ergibt, dass sich das Utility-Schließsystem in einem entriegelten Zustand befindet, während sich das mobile Endgerät relativ zum elektronischen Knauf bewegt, wobei der zugehörige Soll-Zustand verlangt, dass das Utility-Schließsystem nicht entriegelt sein soll, wenn das mobile Endgerät sich über eine Distanz hinaus entfernt. In einem solchen Fall kann eine Benachrichtigung ausgegeben werden, wobei die Ausgabe einer Benachrichtigung jedoch mithilfe der Festlegung räumlicher Bereiche weiteren Regeln unterworfen werden kann. Beispielsweise kann vorgesehen sein, dass keine Benachrichtigung ausgegeben wird, solange sich das mobile Endgerät bzw. der Benutzer in diesem vordefinierten räumlichen Bereich befindet. Hierdurch kann eine ungewünschte Ausgabe einer Benachrichtigung, beispielsweise für größere Areale bzw. Gebäude, insbesondere mit einer Mehrzahl von Räumen, verhindert werden. Beispielsweise ist es denkbar, dass die Schließeinrichtung einen Zugang eines Gebäudeflügels verriegelt. Nach der Entriegelung dieses Zugangs, kann sich ein Nutzer mit seinem mobilen Endgerät über einen langen Zeitraum in dem Gebäudeflügel aufhalten, um beispielsweise Reparaturen oder Wartungsarbeiten in verschiedenen Räumen dieses Gebäudeflügels durchzuführen. Solange das mobile Endgerät den definierten räumlichen Bereich, der zumindest den Gebäudeflügel umfasst, nicht verlässt, wurde das Utility-Schließsystem absichtlich im entriegelten Zustand belassen. Es findet daher in vorteilhafter Weise keine Ausgabe einer Benachrichtigung statt.

Bevorzugt kann sein, dass der Soll-Zustand in Abhängigkeit von einer Uhrzeit und/oder in Abhängigkeit von einer Zeitspanne zwischen Zeitpunkten, zu denen ein Schließzustand der Schließeinrichtung verändert wird, und/oder in Abhängigkeit einer Zeitspanne, während das Schließsystem entriegelt ist, dynamisch angepasst wird. Es ist beispielsweise denkbar, dass der Soll-Zustand in Abhängigkeit einer Uhrzeit, eines Wochentags oder eines Datums angepasst wird. Es ist beispielsweise denkbar, dass der Soll-Zustand derart automatisch angepasst wird, dass die Schließeinrichtung generell nach einer festlegbaren Uhrzeit, beispielsweise 17:00 Uhr, geschlossen sein soll, sodass jedes Öffnen der Schließeinrichtung nach dieser festlegbaren Uhrzeit eine Abweichung von diesem Soll-Zustand darstellt und zur Ausgabe einer Benachrichtigung führt. Alternativ ist es beispielsweise denkbar, dass die Schließeinrichtung an einem festlegbaren Wochentag, beispielsweise sonntags, geschlossen sein soll, sodass jedes Öffnen der Schließeinrichtung an diesem festlegbaren Wochentag eine Abweichung von diesem Soll-Zustand darstellt und zur Ausgabe einer Benachrichtigung führt. Als weiteres Beispiel kann vorgesehen sein, dass der Soll-Zustand wetterabhängig angepasst wird, so dass das Utility-Schließsystem bei Regen nicht entriegelt werden soll. Somit kann eine vorteilhaft erhöhte Sicherheit erreicht werden. Beispielsweise kann somit eine Benachrichtigung bei potentiell unerlaubten Entriegelungen oder Entriegelungsversuchen erfolgen.

Durch das Vorsehen dieser Funktion kann beispielsweise für bestimmte Uhrzeiten ein Soll-Zustand definiert sein, gemäß dem der Schließzustand der Schließeinrichtung ein verriegelter Schließzustand sein soll. Somit können unerwünschte Schließzustände direkt an Tageszeiten oder Zeitspannen gekoppelt werden. Eine zusätzliche Erhöhung der Sicherheit und Zuverlässigkeit des Schließsystems ist dadurch realisierbar.

Insbesondere kann vorgesehen sein, dass die mindestens eine Benachrichtigung durch einen Benutzerbefehl deaktivierbar ist. Einem Benutzer ist es somit durch einen Benutzerbefehl, beispielsweise durch eine Eingabe am mobilen Endgerät, möglich, eine Benachrichtigung zu deaktivieren. Die Ausgabe von Benachrichtigungen ist dadurch besonders einfach an die Bedürfnisse des Benutzers anpassbar.

Es liegt im Sinne der Erfindung, wenn eine Benachrichtigung auch dann ausgegeben wird, wenn keine Abweichung erkannt wird.

Die Schließeinrichtung kann vorzugsweise ohne Interaktion mit dem mobilen Endgerät entriegelt und verriegelt werden. Dies ist insbesondere vorteilhaft, wenn
- der Eigentümer die Verwendung des mobilen Geräts nicht akzeptiert (z. B. in explosionsgefährdeter Umgebung wie Gastankstellen oder Gasdruckregelanlagen)
- der Besitzer das mobile Endgerät nicht als Teil der Ausrüstung akzeptiert, die der Benutzer mit sich führt, was z.B. in Forschungs- bzw. Innovationsbereichen der Fall sein kann;
- das Mobilfunknetz ausgefallen ist, wobei der Benutzer Zugriff auf einen elektronischen Generalschlüssel (Passepartout) an einem bestimmten Ort hat;
- der Benutzer in Notsituationen sofortigen Zugang benötigt, was z.B. für Einsatzkräfte der Feuerwehr gelten kann, welche sich einen elektronischen Schlüssel besorgen können, der in gesonderten Schlüsselkästen in der Nähe der Schließeinrichtung zugriffsbereit ist, um das mobile Endgerät zu ersetzen.

Bevorzugt ist vorgesehen, dass in dem Utility-Schließsystem eine elektronische Steuerung vorgesehen ist, die den Ist-Wert mit dem Soll-Wert vergleicht. Insbesondere ist in dem elektronischen Knauf und/oder in dem mobilen Endgerät eine elektronische Steuerung vorgesehen, die den Ist-Wert mit dem Soll-Wert vergleicht. Die elektronische Steuerung kann ausgebildet sein, die Benachrichtigungung zu veranlassen.

So wird vermieden, dass der Benutzer zurück zum Standort zu fahren hat, wenn er versehentlich etwas vergessen hat. Dies wirkt einer Verschwendung von Zeit und Kraftstoff entgegen, wobei aber auch eine Verletzung von Serviceverpflichtungen vermeidbar ist. Beispielhaft könnte das Utility-Schließsystem in einen entriegelten Zustand belassen worden sein, wenn der Benutzer aus irgendwelchen Gründen abgelenkt war und den Ort verlassen will.

Es ist gemäß einer Ausführungsform der vorliegenden Erfindung denkbar, dass Interaktionen des mobilen Endgeräts mit dem elektronischen Knauf nachgehalten werden, vorzugsweise in einer Datenbank auf einem Server. Es ist denkbar, dass alle Interaktionen des mobilen Endgeräts mit dem elektronischen Knauf nachgehalten werden oder dass nur ein Teil der Interkationen nachgehalten werden, insbesondere derart, dass festlegbare Arten von Interaktionen des mobilen Endgeräts mit dem elektronischen Knauf nachgehalten werden. Die festlegbaren Arten von Interaktionen, die nachgehalten werden, können beispielswiese eine, mehrere oder alle der folgenden Arten von Interkationen umfassen:
- Entriegeln des Utility-Schließsystems mithilfe des mobilen Endgeräts,
- Verriegeln von Schließeinrichtungen mithilfe des mobilen Endgeräts,
- Übertragung einer Kraft vom elektronischen Knauf auf die Schließeinrichtung, insbesondere einer translatorischen und/oder rotatorischen Kraft,
- Empfangen und/oder Ermitteln einer Identifikationsinformation eines Utility-Schließsystems durch das mobile Endgerät, vorzugsweise mittels einer Kommunikation zwischen elektronischem Knauf und mobilen Endgerät,
- Empfangen eines drahtlosen Kommunikationssignals zwischen dem mobilen Endgerät und dem elektronischen Knauf, beispielsweise als Teil eines Pairings.

Gemäß einer Ausführungsform der vorliegenden Erfindung ist es vorgesehen,
-- dass eine Positionsermittlung, betreffend eine Position des Utility-Schließsystems bzw. des elektronischen Knaufs, mithilfe einer Ortungseinrichtung, insbesondere einer Satellitennavigationseinrichtung, des mobilen Endgeräts durchgeführt wird, wobei die Position des Utility-Schließsystems bzw. elektronischen Knaufs mit der Position des mobilen Endgeräts gleichgesetzt wird, insbesondere wenn die Distanz zwischen dem mobilen Endgerät und dem des Utility-Schließsystem bzw. elektronischen Knauf unterhalb eines Schwellenwerts ist, und wobei vorzugsweise die Position des Utility-Schließsystems bzw. des elektronischen Knaufs in einer Datenbank gespeichert wird, und/oder
-- dass eine Identifikationsinformation des Utility-Schließsystems bzw. des elektronischen Knaufs durch das mobile Endgerät ermittelt oder erhalten wird, wobei mithilfe der Identifikationsinformation, und insbesondere mithilfe eines Datenbankabgleichs, eine Positionsermittlung, betreffend eine Position des Utility-Schließsystems bzw. des elektronischen Knaufs, durchgeführt wird.

Es ist beispielsweise denkbar, dass die Identifikationsinformation (insbesondere als Daten) in der Schließeinrichtung gespeichert ist und durch das mobile Endgerät bei einer Interaktion mit des Utility-Schließsystems bzw. dem elektronischen Knauf auslesbar ist. Auch eine Aussendung der Identifikationsinformation durch das Utility-Schließsystem, beispielsweise über eine drahtlose Kommunikationsschnittstelle, und ein Empfangen der ausgesendeten Identifikationsinformation durch das mobile Endgerät ist denkbar. Alternativ oder zusätzlich ist es beispielswiese denkbar, dass das Utility-Schließsystem ihre Identifikationsinformation als optisch ablesbare und/oder auslesbare Information, beispielsweise als Zahlencode, QR-Code oder Strichcode, aufweist, wobei die Identifikationsinformation durch eine entsprechende Detektionseinrichtung des mobilen Endgeräts detektiert wird.

In einer Datenbank, vorzugsweise auf einem Server, mit dem das mobile Endgerät kommunizieren kann, kann ein Zusammenhang zwischen der Identifikationsinformation des Utility-Schließsystems und der Position bzw. dem Verwendungsort und/oder Einbauort des Utility-Schließsystems hinterlegt, sodass durch eine Datenbankabfrage aus der Identifikationsinformation auf die Position geschlossen werden kann, an der sich das mobile Endgerät beim Erhalten oder Ermitteln der Identifikationsinformation befunden haben. Hierdurch kann in besonders vorteilhafter Weise nachgehalten werden, an welchen Orten sich das mobile Endgerät befunden hat.

Es können somit beispielsweise Unstimmigkeiten zwischen Wartungsplänen oder Reparaturplänen und tatsächlich durchgeführten Wartungsarbeiten oder Reparaturarbeiten ermittelt werden. Ferner kann somit in effizienter und automatisierter Weise nachgehalten werden, an welchen Orten Arbeiten durch die Person durchgeführt wurden, ohne dass hierfür jeweils umständlich und manuell Listen durch technisches Personal geführt werden müssen.

Beispielsweise ist es denkbar, dass eine Vielzahl von Schließeinrichtungen an einer Vielzahl von Stromkästen angeordnet ist, wobei eine oder mehrere Personen mit ihren mobilen Endgeräten Arbeiten an jedem dieser Stromkästen vornehmen müssen, beispielsweise Prüfungsarbeiten oder Reparaturarbeiten an den Stromkästen. Mithilfe der vorliegenden Erfindung kann eine automatisierte Positionsermittlung umgesetzt werden, sodass in einer Datenbank nachgehalten werden kann, an welchen Orten und somit an welchen Stromkästen die Personen bereits waren. Es kann somit sichergestellt und kontrolliert werden, dass kein Stromkasten vergessen wurde, und vermieden werden, dass einzelne Stromkästen mehrfach abgefahren werden. Auch kann geprüft werden, ob die Personen eine ggf. vorgegebene Reihenfolge von Wartungsarbeiten eingehalten haben. Es können hierdurch Fehler und technische Probleme vermieden werden. Ferner können der Energieaufwand und die Kosten, die beispielsweise durch unnötiges doppeltes Anfahren eines Stromkastens entstehen würden, verringert werden. Des Weiteren kann hierdurch beispielsweise nachgehalten und ermittelt werden, welche Stromkästen besonders häufig gewartet/repariert wurden, sodass ggf. systematische Probleme erkennbar sind oder potentielle Störungen durch äußere Einflüsse gezielt ermittelt werden können.

Für die Datenbank sind eine Vielzahl von unterschiedlichen Ausführungsformen und Positionen denkbar. Es ist beispielsweise denkbar, dass die Datenbank in einem Serversystem angeordnet ist, beispielsweise als Cloud, oder in dem mobilen Endgerät. Es ist denkbar, dass der elektronische Knauf und/oder das mobile Endgerät eine direkte Kommunikationsverbindung zur Datenbank aufweisen oder dass die Übermittlung von Daten zwischen dem elektronischen Knauf und/oder dem mobilen Endgerät einerseits und der Datenbank andererseits über Zwischenstationen bzw. Zwischenelemente erfolgt. Insbesondere kann vorgesehen sein, dass der elektronische Knauf durch das mobile Endgerät mit der Datenbank kommuniziert, wobei das mobile Endgerät als "Gateway" verwendet wird. Es ist denkbar, dass die Datenbank eine verteilte Datenbank ist oder eine zentrale Datenbank ist.

Es ist denkbar, dass, insbesondere durch einen Eigentümer des Utility-Schließsystems, eine Markierung für mobile Endgeräte in einer Datenbank hinterlegbar ist, wobei die Markierung vorzugsweise angibt, dass das mobile Endgerät gesperrt ist und/oder verloren wurde und/oder entwendet wurde und/oder nicht mehr verwendet wird. Alternativ oder zusätzlich ist es denkbar, dass das mobile Endgerät, insbesondere durch einen Eigentümer des Utility-Schließsystems, einer Sperrliste (Blacklist) hinzufügbar ist. Es ist denkbar, dass eine Warnbenachrichtigung ausgeben wird, wenn ein derart markiertes mobiles Endgerät, das sich auf der Sperrliste befindet, verwendet wird, beispielsweise zur Entriegelung eines Utility-Schließsystems.

In einem weiteren Aspekt der Erfindung wird ein elektronischer Knauf zur Verwendung in dem vorgenannten Verfahren aufgezeigt mit einem Prozessor und einem Speicher, mit mindestens einem Sensor, der eingerichtet ist, um einen Ist-Zustand des Utility-Schließsystems zu ermitteln, und mit einer Schnittstelle zur drahtlosen Kommunikation mit einem mobilen Endgerät.

Mit dem elektronischen Knauf sind die oben mit Bezug auf die entsprechende Ausgestaltung des Verfahrens genannten Vorteile entsprechend verbunden. Insbesondere kann der entsprechend ausgebildete elektronische Knauf zur Durchführung des Verfahrens verwendet werden.

Insbesondere kann der elektronische Knauf einen Sensor zur Bestimmung eines Schließzustands der Schließeinrichtung aufweisen, wobei der Schließzustand der Schließeinrichtung ein entriegelter oder verriegelter Zustand sein kann. Ferner kann der elektronische Knauf einen Energiespeichert, insbesondere eine Batterie, aufweisen.

Der elektronische Knauf kann beispielsweise nach dem Kupplungsprinzip oder nach dem Sperrprinzip die Schließeinrichtung des Utility-Schließsystems betätigen. Der Fachmann kennt die jeweiligen Funktionsprinzipien.

In einem weiteren Aspekt der Erfindung wird eine Utility-Schließumgebung zur Durchführung des Verfahrens aufgezeigt, umfassend einen elektronischen Knauf und eine Utility-Schließeinrichtung, wobei die Utility-Schließumgebung insbesondere ein mobiles Endgerät umfasst.

Mit der Utility-Schließumgebung sind die oben mit Bezug auf die entsprechende Ausgestaltung des Verfahrens genannten Vorteile entsprechend verbunden. Insbesondere kann eine entsprechend ausgebildete Utility-Schließumgebung zur Durchführung des Verfahrens verwendet werden.

In einem weiteren Aspekt der Erfindung wird ein Computerprogrammprodukt angegeben, umfassend Befehle, die bewirken, dass der elektronische Knauf, und/oder das mobile Endgerät, welches ausgebildet und eingerichtet ist, um mit dem elektronischen Knauf zu kommunizieren, und/oder die Utility-Schließumgebung, das genannte Verfahren ausführt.

Weitere Einzelheiten und Vorteile der Erfindung sollen nachfolgend anhand von in den Figuren gezeigten Ausführungsformen erläutert werden. Es zeigen:
- Fig. 1: eine schematische Darstellung eines Utility-Schließsystems gemäß einer Ausführungsform der Erfindung,
- Fig. 2: ein Ablaufdiagramm einer Ausführungsform des erfindungsgemäßen Verfahrens,
- Fig. 3: eine schematische Darstellung eines elektronischen Knaufs und einer Schließeinrichtung gemäß einer Ausführungsform der vorliegenden Erfindung,
- Fig. 4: eine schematische Darstellung eines elektronischen Knaufss und eines mobilen Endgeräts gemäß einer Ausführungsform der vorliegenden Erfindung, und
- Fig. 5: eine schematische Darstellung mehrerer verteilter Schließsysteme gemäß Ausführungsformen der vorliegenden Erfindung.

In den unterschiedlichen Figuren sind gleiche Teile stets mit denselben Bezugszeichen versehen, weswegen diese in der Regel auch nur einmal beschrieben werden.

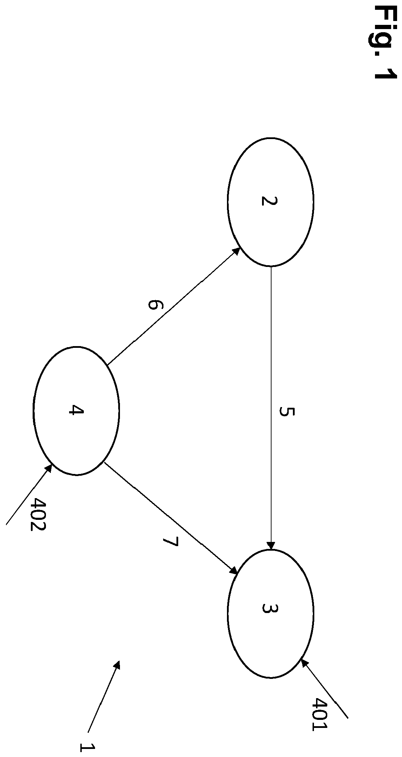

Figur 1 zeigt ein Utility-Schließsystem 1 in einer schematischen Darstellung. Das Utility-Schließsystem 1 weist einen elektronischen Knauf 2 und eine mit dem elektronischen Knauf 2 betätigbare Schließeinrichtung 3 auf.

Das Utility-Schließsystem 1 eignet sich zur Verwendung an einem Gebäude und/oder an einer Zugangslösung für einen Raum, in welchem zu wartende oder zu überprüfende Gerätschaften und/oder Vorrichtungen installiert sind, die auch unter Einhaltung bestimmter Zeitspannen, die gegebenenfalls normiert vorgegeben sind, zu überprüfen bzw. zu sichten sind. Insbesondere kann die Schließeinrichtung 3 als ein Schließzylinder für eine Gebäudetür, eine Raumtür und/oder für eine Möbeltür ausgeführt sein, ohne dass die beispielhafte Nennung solcher Schließzylinder beschränkend sein soll. Die Schließeinrichtung 3 kann lediglich beispielhaft auch als Bügelschloss (Padlock) ausgeführt sein.

Von dem elektronischen Knauf 2 kann ein Drehmoment auf die Schließeinrichtung 3 übertragbar sein, insbesondere übertragen werden, was anhand des Verbindungspfeiles 5 schematisch dargestellt ist.

Gemäß dem Ausführungsbeispiel nach Figur 1 weist das Utility-Schließsystem 1 zudem ein mobiles Endgerät 4, das z. B. als Mobiltelefon ausgebildet ist, auf. Das mobile Endgerät ist ausgebildet und eingerichtet um mit dem elektronischen Knauf 2 und somit mit dem Utility-Schließsystem 1 zu kommunizieren, was mittels der Pfeile 6 und 7 dargestellt ist.

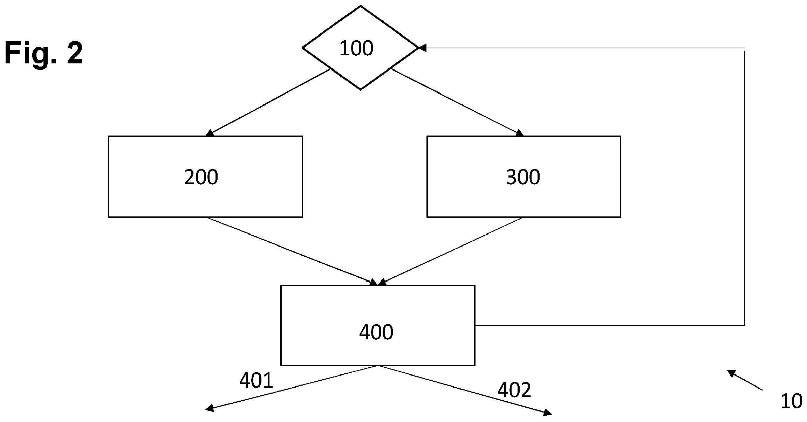

In Figur 2 ist ein Ablaufdiagramm eines Verfahrens 10 zur Ausgabe einer Benachrichtigung über das Vorliegen eines zu vermeidenden Zustands des Utility-Schließsystems 1 angegeben, wobei das Utility-Schließsystem 1 den elektronischen Knauf 2 und die mit dem elektronischen Knauf 2 betätigbare Schließeinrichtung 3, sowie beispielhaft das mobile Endgerät 4 aufweist.

Das Verfahren 10 umfasst zumindest die Schritte:
- Detektieren eines Ist-Zustands des Utility-Schließsystems 1,
- Bestimmen eines Soll-Zustands des Utility-Schließsystems 1 in Abhängigkeit von vordefinierten Kriterien,
- Vergleichen des Ist-Zustands mit dem Soll-Zustand des Utility-Schließsystems 1 und Bestimmung, ob eine Abweichung zwischen dem Ist-Zustand und dem Soll-Zustand des Utlity-Schließsystems 1 vorliegt,
- Ausgeben mindestens einer Benachrichtigung, wenn eine Abweichung zwischen dem Ist-Zustand und dem Soll-Zustand des Utility-Schließsystems 1 vorliegt.

Das Verfahren 10 beginnt in dem Startschritt 100, wobei zum einem in dem Schritt 200 der Ist-Zustand des Utility-Schließsystems 1 detektiert wird. In dem Schritt 300 wird der Soll-Zustand des Utility-Schließsystems 1 bestimmt. Beide Zustände werden dem Vergleichsschritt 400 zugeführt.

Wird eine Abweichung festgestellt, beispielsweise durch einen Vergleich eines Soll-Zustands und eines Ist-Zustands des Utility-Schließsystems, vorzugsweise durch das mobile Endgerät, wird eine Benachrichtigung, insbesondere eine erste Benachrichtigung 401 auf dem elektronischen Knauf 2, und/oder eine Benachrichtigung, insbesondere eine zweite Benachrichtigung 402 auf dem mobilen Endgerät 4 ausgegeben.

Es kann vorgesehen sein, dass der Ist-Zustand des Utility-Schließsystems 1 einen ermittelten Kennwert umfasst, der aus Signalkennwerten der drahtlosen Kommunikation zwischen dem elektronischen Knauf 2 und dem mobilen Endgerät 4 abgeleitet ist. Der Soll-Zustand kann einen Schwellenkennwert umfassen, mit dem der Ist-Zustand verglichen werden kann. Der ermittelte Kennwert ist in dieser Ausführungsform ein Signalstärkekennwert ist und der Schwellenkennwert ist ein Signalstärkeschwellenwert.

Der Ist-Zustand des Schließsystems 1 kann zusätzlich oder alternativ einen Benutzerzustand eines Benutzers des mobilen Endgeräts 4 umfassen. Die Detektion des Benutzerzustands kann dabei anhand von Beschleunigungsdaten und/oder Geschwindigkeitsdaten und/oder Temperaturdaten erfolgen, die mittels Sensoren des mobilen Endgeräts 4 erfasst werden.

Wird keine Abweichung festgestellt, wird zum Startschritt 100 zurückgesprungen, wobei das Verfahren wiederholt wird.

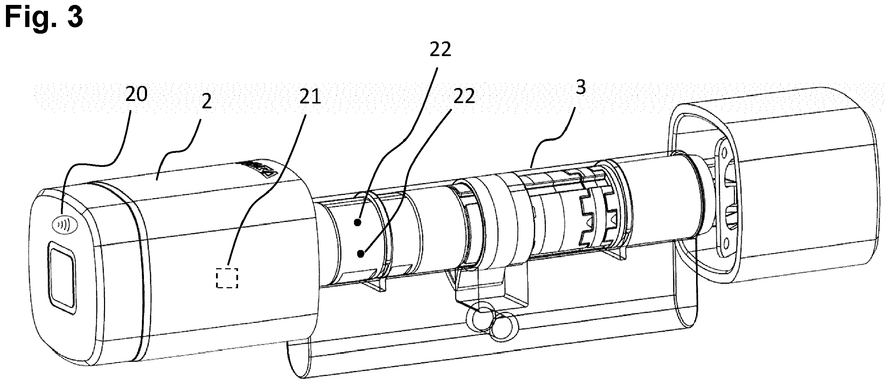

In Figur 3 ist eine schematische Darstellung eines elektronischen Knaufs 2 gemäß einer Ausführungsform der vorliegenden Erfindung gezeigt. Der elektronische Knauf 2 ist mit einer Schließeinrichtung 3 verbunden, insbesondere in einen Schließzylinder eingebracht. Die Schließeinrichtung 3, insbesondere der Schließzylinder, ist in einem verriegelten Zustand elektromechanisch verriegelt. Mithilfe einer manuellen Drehbewegung des elektronischen Knaufs 2 relativ zur Schließeinrichtung 3 kann die Schließeinrichtung entriegelt werden. Mit einer weiteren Drehbewegung kann die Schließeinrichtung 3 wieder entriegelt werden. Dabei kann der elektronische Knauf 2 nach dem Kupplungsprinzip oder nach dem Sperrprinzip ausgebildet sein.

Der elektronische Knauf 2 weist Sensoren 21, 22 auf, die den Ist-Zustand, insbesondere den Schließzustand der Schließeinrichtung 3 überwachen können. Ferner weise der elektronische Knauf 2 eine Schnittstelle 20 für eine drahrlose Kommunikation, insbesondere mit einem mobilen Endgerät auf. Ein Energiespeicher, wie beispielsweise eine Batterie, kann in den elektronischen Knauf 2 integriert sein.

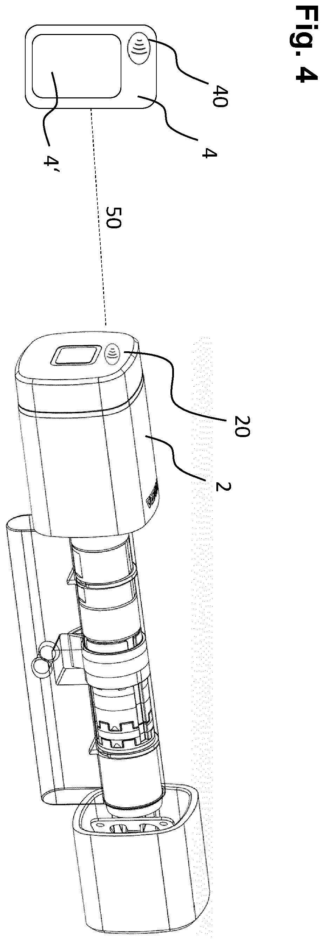

In Figur 4 ist eine schematische Darstellung eines elektronischen Knaufs 2 mit einer Schließeinrichtung 3 gemäß einer Ausführungsform der vorliegenden Erfindung gezeigt, wobei der elektronische Knauf 2 zur Kommunikation mit einem mobilen Endgerät 4 ausgebildet ist. Zur Ausbildung einer drahtlosen Kommunikationsverbindung 50 zwischen dem elektronischen Knauf 2 und dem mobilen Endgerät 4 weist der elektronische Knauf 2 eine Schnittstelle 20, insbesondere eine Kommunikationsschnittstelle, auf. Das mobile Endgerät 4 verfügt ebenso über eine Kommunikationsschnittstelle 40 zur Herstellung der drahtlosen Kommunikationsverbindung 50. Die drahtlose Kommunikationsverbindung 50 kann beispielswiese mithilfe von Bluetooth ausgebildet sein. Auch andere Kommunikationstechnologien und/oder Protokolle kommen infrage.

Es ist denkbar, dass der Ist-Zustand des Schließsystems 1 einen ermittelten Kennwert umfasst, der aus Signalkennwerten einer drahtlosen Kommunikation zwischen dem elektronischen Knauf 2 und dem mobilen Endgerät 4 mithilfe der drahtlosen Kommunikationsverbindung 50 abgeleitet ist. Der Soll-Zustand umfasst in diesem Fall vorzugsweise einen Schwellenkennwert zum Abgleich mit dem ermittelten Kennwert.

Bei einem Vergleichen des Ist-Zustands mit dem Soll-Zustand des Utility-Schließsystems 1 kann somit bestimmt werden, ob eine Abweichung zwischen dem Ist-Zustand und dem Soll-Zustand des Utility-Schließsystems 1 derart vorliegt, ob der ermittelte Kennwert, der aus Signalkennwerten der drahtlosen Kommunikation zwischen dem elektronischen Knauf 2 und dem mobilen Endgerät 4 mithilfe der drahtlosen Kommunikationsverbindung 50 abgeleitet ist, einen Soll-Zustand bzw. ein Soll-Kriterium, das den Schwellenkennwert umfasst oder auf diesem basiert, erfüllt oder nicht. In Abhängigkeit dieses Vergleichs wird mindestens eine Benachrichtigung ausgeben, insbesondere dann, wenn eine Abweichung zwischen dem Ist-Zustand und dem Soll-Zustand des Utility-Schließsystems 1 vorliegt.

Es ist beispielswiese möglich, dass die mindestens eine Benachrichtigung ausgeben wird, wenn der Abgleich zwischen dem ermittelten Kennwert und dem Schwellenkennwert ergibt, dass die Signalstärke der drahtlosen Kommunikationsverbindung unter einer festlegbaren Schwelle ist und/oder unter eine festlegbare Schwelle abfällt und die Utility-Schließeinrichtung 1 entriegelt ist. Hieraus kann in einer Vielzahl von Situationen gefolgert werden, dass sich das mobile Endgerät 4 von der Utility-Schließeinrichtung 1 entfernt und vergessen wurde, die Utility-Schließeinrichtung 1 zu verriegeln.

Der elektronische Knauf 2 umfasst vorzugsweise eine Vorrichtung zur Ausgabe einer ersten Benachrichtigung, beispielsweise einen Lautsprecher, eine Signallampe und/oder einen Bildschirm.

Das mobile Endgerät 4 weist vorzugsweise eine Wiedergabeeinrichtung 4', insbesondere einen Bildschirm, auf, der zur Ausgabe und/oder Darstellung einer zweiten Benachrichtigung konfiguriert ist. Alternativ oder zusätzlich zu einem Bildschirm kann das mobile Endgerät 4 beispielsweise auch einen Lautsprecher zur Ausgabe einer zweiten Benachrichtigung umfassen.

Ferner sind in Figur 4 schematisch dargestellte Sensoren 21, 22 des elektronischen Knaufs 2 dargestellt. Der Schließzustand der Schließeinrichtung 3 bzw. des Utility-Schließsystems 1 kann in dieser Ausführungsform mittels Daten der Sensoren 21, 22 ermittelt werden. Die Sensoren 21, 22 können zumindest teilweise im elektronischen Knauf 2 und/oder in der Schließeinrichtung 3 angeordnet sein.

Der Sensor 21 kann ein Beschleunigungssensor 21 oder ein Gyroskop 21 sein. Das Bezugszeichen 21 wird somit nachfolgen auch für die Begriffe "Beschleunigungssensor" und "Gyroskop" verwendet. Der Sensor 22 ist beispielsweise eine Anordnung von Drucksensoren 22, wobei vorzugsweise mindestens zwei Drucksensoren 22 vorgesehen sind, um die Übertragung eines Drehmoments auf ein Schloss beim Verriegeln und Entriegeln zu detektieren. Das Bezugszeichen 22 wird somit nachfolgend auch für den Begriff "Drucksensor" verwendet. Die Genauigkeit der Detektion kann dadurch erhöht werden, dass mehr als zwei Drucksensoren 21 vorgesehen werden, beispielsweise zwei auf jeder Seite.

Durch die Erfassung und Verarbeitung von Sensordaten der Sensoren 21, 22 kann sichergestellt werden, dass der jeweilige Schließzustand zu jeder Zeit in seinem tatsächlichen Zustand generierbar ist. Mithilfe eines Beschleunigungssensors 21, Gyroskops 21 und/oder Drucksensors 22 des elektronischen Knaufs 2 ist somit in vorteilhafter Weise der Schließzustand der Schließeinrichtung 3 bzw. des Schließsystems 1 ermittelbar.

Die Verwendung eines Beschleunigungssensors 21 ist hinsichtlich seines besonders geringen Stromverbrauchs aber auch bezüglich der preiswerten Beschaffung vorteilhaft. Die Verwendung eines Gyroskops 21 ist hinsichtlich dessen hoher Genauigkeit vorteilhaft. Die Verwendung von Drucksensoren 22 ist hinsichtlich der besonders einfachen Ableitung des Schließzustands sowie der einfachen konstruktiven Ausgestaltung vorteilhaft. Eine besonders einfache Anordnung der Drucksensoren 22 ist Figur 4 zu entnehmen. Hier sind die Drucksensoren 22 an Stellen des elektronischen Knaufs 2 angeordnet, die es erlauben eine Drehrichtung des elektronischen Knaufs 2 bei der Übertragung eines Drehmoments auf die Schließeinrichtung 3 zu erkennen und daraus den Schließzustand des Schließsystems 1 abzuleiten.

Es kann insbesondere vorgesehen sein, dass das Schließsystem 1 Informationen darüber umfasst, ob sich das mobile Endgerät 4, das eine drahtlose Kommunikationsverbindung zu dem elektronischen Knauf 2 aufweist, innerhalb eines vordefinierten räumlichen Bereichs befindet. Bei einer Abweichung des Ist-Zustands von dem Soll-Zustand kann vorgesehen sein, dass nur dann die Ausgabe einer Benachrichtigung erfolgt, wenn sich das mobile Endgerät 4 außerhalb des vordefinierten räumlichen Bereichs befindet.

Durch diese Funktion wird vermieden, dass ein Benutzer während beispielsweise der Durchführung von Wartungsarbeiten an einem vorgesehenen Ort, der durch das Schließsystem 1 gesichert ist, eine Benachrichtigung erhält. Mit anderen Worten: Ein Benutzer, der das mobile Endgerät 4 bei sich trägt und sich in einem vordefinierten räumlichen Bereich bewegt, beispielsweise in einem Raum, in dem Wartungsarbeiten durch den Benutzer zu erledigen sind, erhält, während er sich in dem vordefinierten räumlichen Bereich befindet, keine Benachrichtigung. Dadurch wird vermieden, dass der Benutzer durch nicht notwendige Benachrichtigungen während der Durchführung von beispielsweise Wartungsarbeiten gestört wird. Ferner werden Fehlalarme vermieden.

Es kann ferner vorgesehen sein, dass der Soll-Zustands in Abhängigkeit von einer Uhrzeit und/oder in Abhängigkeit von einer Zeitspanne zwischen Zeitpunkten, zu denen ein Schließzustand der Schließeinrichtung 3 verändert wird, dynamisch veränderbar ist.

Durch das Vorsehen dieser Funktion kann beispielsweise für bestimmte Uhrzeiten ein Soll-Zustand definiert sein, gemäß dem der Schließzustand der Schließeinrichtung 3 ein verriegelter Schließzustand sein soll. Somit können unerwünschte Schließzustände direkt an Tageszeiten oder Zeitspannen gekoppelt werden. Eine zusätzliche Erhöhung der Sicherheit und Zuverlässigkeit des Schließsystems ist dadurch realisierbar.

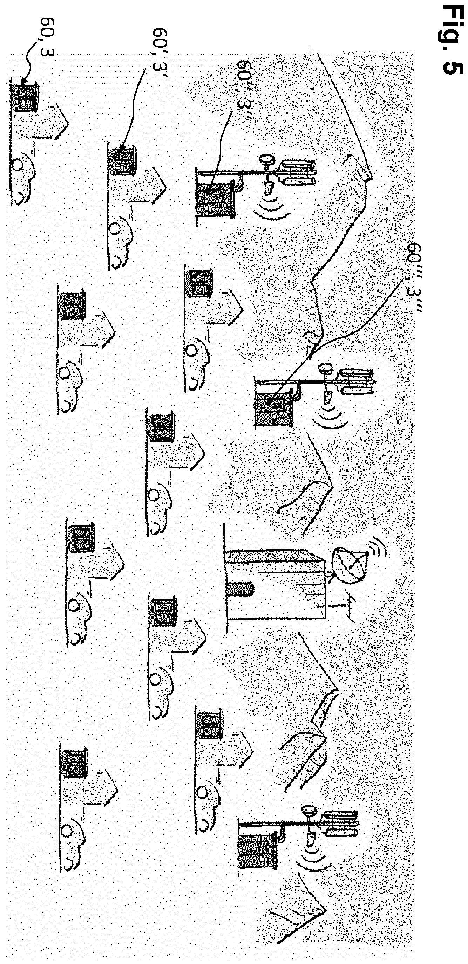

In Figur 5 sind mehrere verteilte Schließsysteme gemäß Ausführungsformen der vorliegenden Erfindung gezeigt. Es sind eine Vielzahl von Gebäuden und/oder Vorrichtungen vorhanden, die jeweils durch eine Tür 60, 60', 60", 60‴ verschließbar sind. Die Gebäude und/oder Vorrichtungen können sich an unterschiedlichen Orten befinden. Es ist beispielsweise denkbar, dass in den Gebäuden und/oder an den Vorrichtungen technische Wartungsarbeiten und/oder Reparaturarbeiten durchzuführen sind. Die Türen 60, 60', 60", 60'" sind jeweils mithilfe von Schließeinrichtungen 3, 3', 3", 3'" gesichert. Ein elektronischer Knauf 2 ist konfiguriert und eingerichtet, um die Schließeinrichtungen 3, 3', 3", 3‴ zu öffnen. Der elektronische Knauf 2 wird beispielsweise von einer Person mitgeführt, die die Wartungsarbeiten und/oder Reparaturarbeiten durchführt.

Vorzugsweise weisen die Schließeinrichtungen 3, 3', 3", 3'" jeweils Identifikationsinformationen auf, die die Schließeinrichtungen 3, 3', 3", 3‴ jeweils eindeutig identifizieren. Diese Identifikationsinformationen werden von einem mobilen Endgerät 4 ausgelesen und/oder empfangen. Durch ein Nachhalten der Identifikationsinformationen in einer Datenbank kann somit ermittelt werden, wo sich das mobile Endgerät 4 befunden hat bzw. welche Schließeinrichtungen 3, 3', 3", 3‴ abgefahren wurden. Vorzugsweise wird zusätzlich eine Zeitinformation erfasst, die sich auf die Zeit bezieht, zu der der elektronische Knauf 2 mit der entsprechenden Schließeinrichtung 3, 3', 3", 3‴ interagiert hat.

Mit den in den in den Figuren dargestellten Ausführungsformen der vorliegenden Erfindung ist das erfindungsgemäße Verfahren durchführbar.

### Bezugszeichenliste:

- 1: Schließsystem
- 2: Elektronischer Knauf
- 3: Utility-Schließeinrichtung
- 4: mobiles Endgerät
- 4': Wiedergabeeinrichtung
- 5: Pfeil
- 6: Pfeil
- 7: Pfeil
- 10: Verfahren
- 20: Schnittstelle
- 21: Sensor, Beschleunigungssensor, Gyroskop
- 22: Sensor, Drucksensor
- 40: Schnittstelle
- 50: Kommunikationsverbindung
- 60 bis 60‴: Türen
- 100 bis 400: Verfahrensschritte
- 401: erste Benachrichtigung
- 402: zweite Benachrichtigung

## Patentansprüche

1. Verfahren zur Ausgabe einer Benachrichtigung über das Vorliegen eines zu vermeidenden Zustands eines Utility-Schließsystems (1), wobei das Utility-Schließsystem (1) einen elektronischen Knauf (2) und eine mit dem elektronischen Knauf (2) betätigbare Schließeinrichtung (3) umfasst, wobei zum Überführen des Utility-Schließsystems (1) von einem verriegelten in einen entriegelten Zustand und/oder von einem entriegelten Zustand in einen verriegelten Zustand manuell eine Kraft vom elektronischen Knauf (2) auf die Schließeinrichtung (3) übertragbar ist bzw. übertragen wird, mit den Schritten:
- Detektieren eines Ist-Zustands des Utility-Schließsystems (1),
- Bestimmen eines Soll-Zustands des Utility-Schließsystems (1) in Abhängigkeit von vordefinierten Kriterien,
- Vergleichen des Ist-Zustands mit dem Soll-Zustand des Utility-Schließsystems (1) und Bestimmung, ob eine Abweichung zwischen dem Ist-Zustand und dem Soll-Zustand des Utility-Schließsystems (1) vorliegt,
- Ausgeben mindestens einer Benachrichtigung, wenn eine Abweichung zwischen dem Ist-Zustand und dem Soll-Zustand des Utility-Schließsystems (1) vorliegt.

2. Verfahren nach Anspruch 1, wobei der elektronische Knauf (2) elektrisch und/oder mechanisch mit der Schließeinrichtung (3) gekoppelt, insbesondere verbunden, ist, und wobei vorzugsweise der elektronische Knauf (2) von der Schließeinrichtung (3) elektrisch und/oder mechanisch zerstörungsfrei lösbar ist.

3. Verfahren nach einem der vorhergehenden Ansprüche, wobei der elektronische Knauf (2) und ein mobiles Endgerät (4) dazu eingerichtet sind, miteinander drahtlos zu kommunizieren und zumindest Zutrittsberechtigungen und/oder Öffnungsbefehle und/oder Positionsdaten zu übertragen.

4. Verfahren nach einem der vorhergehenden Ansprüche, **dadurch gekennzeichnet, dass** die Kraft, die zum Überführen des Utility-Schließsystems (1) von einem verriegelten in einen entriegelten Zustand und/oder von einem entriegelten Zustand in einen verriegelten Zustand vom elektronischen Knauf (2) auf die Schließeinrichtung (3) übertragen wird, einhergeht mit einer manuell durch einen Benutzer geführten translatorischen und/oder rotatorischen Bewegung des elektronischen Knaufs (2) relativ zur Schließeinrichtung (3), wobei die Kraft insbesondere ein Drehmoment ist.

5. Verfahren nach einem der vorhergehenden Ansprüche, **dadurch gekennzeichnet, dass** beim Ausgeben der mindestens einen Benachrichtigung, eine, insbesondere erste, Benachrichtigung (401) auf dem elektronischen Knauf (2) ausgegeben wird, wobei die Benachrichtigung insbesondere eine akustische und/oder haptische und/oder visuelle Benachrichtigung ist.

6. Verfahren nach einem der vorhergehenden Ansprüche, **dadurch gekennzeichnet, dass** beim Ausgeben der mindestens einen Benachrichtigung, eine, insbesondere zweite, Benachrichtigung (402) auf einem mobilen Endgerät (4) ausgegeben wird, wobei das mobile Endgerät (4) ausgebildet und eingerichtet ist, um mit dem Utility-Schließsystem dem elektronischen Knauf (2) und/oder mit der Schließeinrichtung (3) zu kommunizieren, wobei die Benachrichtigung insbesondere eine akustische und/oder haptische und/oder visuelle Benachrichtigung ist.

7. Verfahren nach einem der vorhergehenden Ansprüche, **dadurch gekennzeichnet, dass** der Ist-Zustand des Utility-Schließsystems (1) einen entriegelten und einen verriegelten Zustand umfassen kann,
wobei vorzugsweise vorgesehen ist, dass der Schließzustand des Utility-Schließsystems (1) mittels Daten mindestens eines im oder am elektronischen Knauf (2) angeordneten Sensors (21, 22) ermittelt wird, wobei der mindestens eine Sensor (21, 22) insbesondere ausgewählt ist aus den folgenden Sensortypen: Beschleunigungssensor, Gyroskop, Drucksensor.

8. Verfahren nach einem der vorhergehenden Ansprüche, **dadurch gekennzeichnet, dass** der Ist-Zustand des Utility-Schließsystems (1) einen ermittelten Kennwert umfasst, der aus Signalkennwerten einer drahtlosen Kommunikation zwischen dem elektronischen Knauf (2) und einem mobilen Endgerät (4) abgeleitet ist, wobei aus den Signalkennwerten der drahtlosen Kommunikation eine Distanz zwischen dem mobilen Endgerät (4) und dem elektronischen Knauf (2) ableitbar ist, und wobei der Soll-Zustand einen Schwellenkennwert umfasst, und wobei vorzugsweise der ermittelte Kennwert ein Signalstärkekennwert ist und der Schwellenkennwert ein Signalstärkeschwellenwert ist.

9. Verfahren nach einem der vorhergehenden Ansprüche, **dadurch gekennzeichnet, dass** der Ist-Zustand des Utility-Schließsystems (1) einen Benutzerzustand eines Benutzers eines mobilen Endgeräts (4), welches ausgebildet und eingerichtet ist, um mit dem elektronischen Knauf (2) und/oder mit der Schließeinrichtung (3) drahtlos zu kommunizieren, umfasst, wobei eine Detektion des Benutzerzustands anhand von Beschleunigungsdaten und/oder Geschwindigkeitsdaten und/oder Temperaturdaten erfolgt, wobei die Beschleunigungsdaten und/oder Geschwindigkeitsdaten und/oder Temperaturdaten mittels Sensoren (21) des mobilen Endgeräts (4) erfasst werden.

10. Verfahren nach einem der vorhergehenden Ansprüche, **dadurch gekennzeichnet, dass** eine Abweichung des Ist-Zustands vom Soll-Zustand vorliegt, wenn
- sich die Schließeinrichtung (3) im entriegelten Zustand befindet, und
- ein mobiles Endgerät (4), welches zur Entriegelung des Utility-Schließsystems (1) zuvor mit dem elektronischen Knauf (2) kommuniziert hat, sich vom elektronischen Knauf (2) entfernt oder entfernt hat, wobei insbesondere ein Entfernen des mobilen Endgeräts (4) vom elektronischen Knauf (2) durch eine Signalstärke der drahtlosen Verbindung und/oder durch Ortungsdaten und/oder durch Beschleunigungsdaten und/oder Geschwindigkeitsdaten des mobilen Endgeräts (4) festgestellt wird.

11. Verfahren nach einem der vorhergehenden Ansprüche, **dadurch gekennzeichnet, dass** das Utility-Schließsystem (1) Informationen darüber umfasst, ob sich ein mobiles Endgerät (4), welches ausgebildet und eingerichtet ist, um mit dem elektronischen Knauf (2) und/oder mit der Schließeinrichtung (3) zu kommunizieren, innerhalb eines vordefinierten räumlichen Bereichs befindet, wobei bei einer Abweichung des Ist-Zustands vom Soll-Zustand nur dann die Ausgabe einer Benachrichtigung erfolgt, wenn sich das mobile Endgerät (4) außerhalb des vordefinierten räumlichen Bereichs befindet.

12. Verfahren nach einem der vorhergehenden Ansprüche, **gekennzeichnet durch** dynamisches Anpassen des Soll-Zustands in Abhängigkeit von einer Uhrzeit und/oder in Abhängigkeit von einer Zeitspanne zwischen Zeitpunkten, zu denen ein Schließzustand der Schließeinrichtung (3) verändert wird, und/oder in Abhängigkeit einer Zeitspanne, nachdem der elektronische Knauf (2) betätigt worden ist.

13. Verfahren nach einem der vorhergehenden Ansprüche, **dadurch gekennzeichnet,**
**dass** eine Positionsermittlung, betreffend eine Position des Utility-Schließsystems (1) bzw. des elektronischen Knaufs (2), mithilfe einer Ortungseinrichtung, insbesondere einer Satellitennavigationseinrichtung, des mobilen Endgeräts (4) durchgeführt wird, wobei die Position des Utility-Schließsystems (1) bzw. elektronischen Knaufs (2) mit der Position des mobilen Endgeräts (4) gleichgesetzt wird, insbesondere wenn die Distanz zwischen dem mobilen Endgerät (4) und dem des Utility-Schließsystem (1) bzw. elektronischen Knauf (2) unterhalb eines Schwellenwerts ist, und wobei vorzugsweise die Position des Utility-Schließsystems (1) bzw. des elektronischen Knaufs in einer Datenbank gespeichert wird, und/oder
**dass** eine Identifikationsinformation des Utility-Schließsystems (1) bzw. des elektronischen Knaufs (2) durch das mobile Endgerät (4) ermittelt oder erhalten wird, wobei mithilfe der Identifikationsinformation, und insbesondere mithilfe eines Datenbankabgleichs, eine Positionsermittlung, betreffend eine Position des Utility-Schließsystems (1) bzw. des elektronischen Knaufs (2), durchgeführt wird.

14. Elektronischer Knauf (2) als Bauteil eines Utility-Schließsystems (1) zur Verwendung in einem Verfahren nach einem der Ansprüche 1 bis 13 mit:
- einem Prozessor,
- einem Speicher,
- mindestens einem Sensor, der eingerichtet ist, um einen Ist-Zustand des Utility-Schließsystems (1) zu ermitteln,
- einer Schnittstelle zur drahtlosen Kommunikation mit einem mobilen Endgerät (4).

15. Utility-Schließumgebung zur Durchführung des Verfahrens nach einem der Ansprüche 1 bis 13, umfassend einen elektronischen Knauf (2) nach Anspruch 14 und eine Schließeinrichtung (3), wobei die Utility-Schließumgebung insbesondere ein mobiles Endgerät (4) umfasst.

16. Computerprogramm, umfassend Befehle, die bewirken, dass der elektronische Knauf (2) nach Anspruch 14, und/oder ein mobiles Endgerät (4), welches ausgebildet und eingerichtet ist, um mit dem elektronischen Knauf (2) nach Anspruch 14 zu kommunizieren, und/oder die Utility-Schließumgebung nach Anspruch 15, das Verfahren nach einem der Ansprüche 1 bis 13 ausführt.
